# NEUE EUROPÄISCHE PATENTSCHRIFT

(11) **EP 0 575 657 B2**
(45) Veröffentlichungstag und Bekanntmachung des Hinweises auf die Entscheidung über den Einspruch: **21.03.2007**
(45) Hinweis auf die Patenterteilung: 26.01.2000
(21) Anmeldenummer: 92110815.5
(22) Anmeldetag: 26.06.1992
(51) Int. Cl.: G05B 19/18, B24B 33/10

(54) **Verfahren und Maschine zum Feinbearbeiten von Bohrungen in Werkstücken**
Method and machine for finishing a bore in workpieces
Méthode et machine pour l'usinage au fouesse du perçages dans des pièces à usiner

(43) Veröffentlichungstag der Anmeldung: 29.12.1993
(73) Patentinhaber: Maschinenfabrik Gehring GmbH & Co., D-73760 Ostfildern (DE)
(72) Erfinder: Grimm, Hans, W-7300 Esslingen (DE); Fingerle, Hermann, W-7318 Lenningen 1 (DE)
(74) Vertreter: Dreiss, Fuhlendorf, Steimle & Becker

(56) Entgegenhaltungen:
- DE-A- 1 919 403
- DE-A- 1 950 112
- DE-A- 3 039 467
- DE-A- 3 042 755
- "Neuere Entwicklungen bei Honmaschinen", K.-H.Bergen, Schriftenreihe des Instituts für Werkzeugmaschinen und Fertigungstechnik der TU Braunschweig, 2. Fachtagung in Braunschweig 27. und 28.11.1991, Vulkan Verlag, Essen 1991, S. 128ff. 133, 134, 150-153
- "Variables Formhonen durch rechnergestützte Honprozesssteuerung", Robert Zurrin, Dissertation, Uni Karlsruhe 1990
- "Variables Formhonen durch rechnergestützte Honprozesssteuerung", Robert Zurrin, Dissertation, Uni Karlsruhe 1990

## Beschreibung

Die Erfindung betrifft ein Verfahren zum Feinbearbeiten von Bohrungen in Werkstücken unter Verwendung eines Werkzeuges mit expandierbaren Arbeitsteilen wie Honleisten oder Honsteinen, nach dem Oberbegriff des Patentanspruches 1, sowie eine Maschine eingerichtet zur Durchführung des Verfahrens, insbesondere eine Honmaschine, nach dem Oberbegriff des Patentanspruches 10.

Es ist ein Verfahren und eine Maschine dieser Art bekannt, um die expandierbaren Honleisten eines Honwerkzeuges vor der Bearbeitung der Werkstück-Bohrung mittels eines Zustellgliedes innerhalb eines zur Bohrung koaxialen Eichringes bis an dessen Innenwandung zuzustellen und damit den Zustellweg des Zustellgliedes für die nachfolgende Honoperation festzulegen (US-A1 2 194 821). Bei dieser bekannten Maschine wird der Zustellweg dadurch bestimmt, daß die Honleisten innerhalb des Eichringes mittels einer federbelasteten Zustellstange expandiert werden, die das Zustellglied bildet und die mittels einer Zustelleinrichtung axial gegen die Federkraft verschoben wird, wobei der Zustellweg durch eine längs der Zustellstange axial verstellbare Hülse bestimmt wird, die eine Feder mit großer Federkraft enthält. Diese Feder wird beim Einfahren in die zu bearbeitende Bohrung zusammengedrückt und entspannt sich mit zunehmender Erweiterung der Bohrung. Der Zustellweg ist daher proportional zum Innendurchmesser des Eichringes, und die Zustellkraft ist ausschließlich von der starken Feder abhängig, deren Vorspannung nicht einstellbar ist. Mit dieser Zustellung mittels eines Eichringes kann zwar eine gewisse Maßgenauigkeit der Bohrung ohne zusätzliche Meßglieder erreicht werden, jedoch genügt die Genauigkeit hohen Anforderungen nicht. So können dabei nicht die unvermeidlichen Unterschiede im Schneidverhalten der Honsteine berücksichtigt werden, ebensowenig Materialunterschiede im Werkstoff der zu bearbeitenden Werkstücke. Ein weiterer Grund für die ungenügende Maßgenauigkeit ist die mechanische Festigkeit der Werkstücke, beispielsweise ihr Dehnverhalten unter den Bearbeitungskräften, das insbesondere bei dünnwandigen Werkstücken von Bedeutung ist.

Es ist auch bekannt, die Zustellung von Honsteinen während der Bearbeitung einer Bohrung zu steuern, um den Anpreßdruck der Honsteine in Abhängigkeit von gemessenen Werten der Werkstückbohrung automatisch einzustellen (DE-C2 30 39 467). Damit sollen während der Bearbeitung auftretende und gemessene Formfehler der Bohrung korrigiert werden, wofür die Differenz von in zwei Ebenen der Bohrung gemessenen Durchmessern ermittelt und der Anpreßdruck entsprechend dem Meßergebnis verändert wird. Eine Voreinstellung des Zustellweges nach Maßgabe eines Muster-Werkstückes bzw. eines Eichringes ist bei diesem Verfahren nicht vorgesehen.

Weiterhin ist ein Verfahren zum Honen von Bohrungen bekannt (EP-A1 0 390 938), bei dem die Druckkraft der an der Bohrungswandung anliegenden Honleisten während der Bearbeitung auf einen vorbestimmten Sollwert geregelt wird, der aus vorgegebenen Bohrungsmaßen und Bewegungsabläufen errechnet wurde. Diese Regelung ermöglicht ebenfalls keine Voreinstellung des Zustellweges, mit ihr soll vielmehr die Flächenpressung der Honleisten an die jeweiligen Gegebenheiten der zu bearbeitenden Bohrung angepaßt, insbesondere konstant gehalten werden.

Aus der Veröffentlichung von K.-H. Bergen, Neuere Entwicklungen bei Honmaschinen, Schriftenreihe des Instituts für Werkzeugmaschinen und Fertigungstechnik der Technischen Universität Braunschweig unter dem Titel "Honen in Forschung und in industrieller Anwendung" (2. Fachtagung am 27.+28.11.1991 in Braunschweig, Vulkan-Verlag, Essen (1991), S. 128 ff., 133, 134, 150-153), ist ein System mit einer hydraulischen Weg- und einer hydraulischen Kraftzustellung bekannt geworden. Ausgehend von voll zurückgezogenen Honsteinen bei stillstehender Spindel die Honsteine kraftgesteuert angelegt. Es ist ferner aus der Dissertation von R. Zurrin, Variables Foam-Honen durch rechnergestützte Honprozesssteuerung, Institut für Werkzeugmaschinen und Betriebstechnik der Universität Karlsruhe (1990), S.24, bekannt, die prozessbestimmenden Konus- und Radialkräfte bei Honwerkzeugen zu messen.

Ausgehend von diesem Stand der Technik stellt sich die Aufgabe, bei einer schrittförmigen Zustellung des Werkzeugs die Maßgenauigkeit der fertigen Bohrung weiter zu verbessern.

Diese Aufgabe wird gemäß der Erfindung bei dem Verfahren nach Patentanspruch 1 und Patentanspruch 10 mit den dort angegebenen Mitteln gelöst. Die erfindungsgemäße Lösung basiert somit darauf, die Zustellkraft des Werkstückes während des Honprozesses ständig zu messen und als Signal einer Steuerung zuzuführen.

Bei diesem Verfahren wird der Zustellweg des Zustellgliedes nach Maßgabe einer bestimmten Zustellkraft voreingestellt, die bei Erreichen des Fertigmaßes der Bohrung auftritt. Diese Zustellkraft kann sich entsprechend dem Schneidverhalten der Arbeitsteile des Werkzeuges und auch aufgrund weiterer Gegebenheiten ändern, beispielsweise durch Materialunterschiede im Werkstoff der Werkstücke und deren unterschiedliche Festigkeit. Bei dem erfindungsgemäßen Verfahren wird der Zustellweg und damit die Zustellkraft an die unterschiedlichen Bedingungen angepaßt. Hierfür wird die Zustellkraft bei innerhalb des Muster-Werkstückes befindlichem Werkzeug gemessen und ein Endwert für den Zustellweg fixiert, wenn die vorgegebene Zustellkraft erreicht ist. Insbesondere ist vorgesehen, daß der Zustellweg beim Expandieren der Arbeitsteile des Werkzeuges im Muster-Werkstück nach Maßgabe einer Zustellkraft bestimmt wird, die durch Messung der Zustellkraft bei Erreichen des Fertigmaßes der Bohrung an einem vorher bearbeiteten Werkstück ermittelt wurde.

Ändert sich diese gemessene Zustellkraft infolge geänderter Zerspanbedingungen - wie Materialeigenschaften oder Etastizitätsverhalten des Werkstükkes - so wird der Zustellweg geändert, d.h. die beim Zerspanen an dem vorhergehenden Werkstück zuletzt gemessene Zustellkraft ist bei der Bearbeitung des nächsten Werkstückes maßgebend. Der Zustellweg kann außerdem zur Berücksichtigung der Werkzeugabnutzung geändert werden, wobei ebenfalls die zuletzt gemessene Zustellkraft maßgeblich ist.

Um den Zustellweg nach Maßgabe der Zustellkraft festzulegen, werden bei der Maschine nach Anspruch 10 die Meßwerte des Kraftmeßgliedes über die numerische Steuerung zum Steuern der Zustelleinrichtung ausgewertet.

Weitere Merkmale der Erfindung ergeben sich aus den übrigen Ansprüchen.

Die Erfindung wird im folgenden anhand einer schematisch dargestellten Honmaschine näher erläutert.

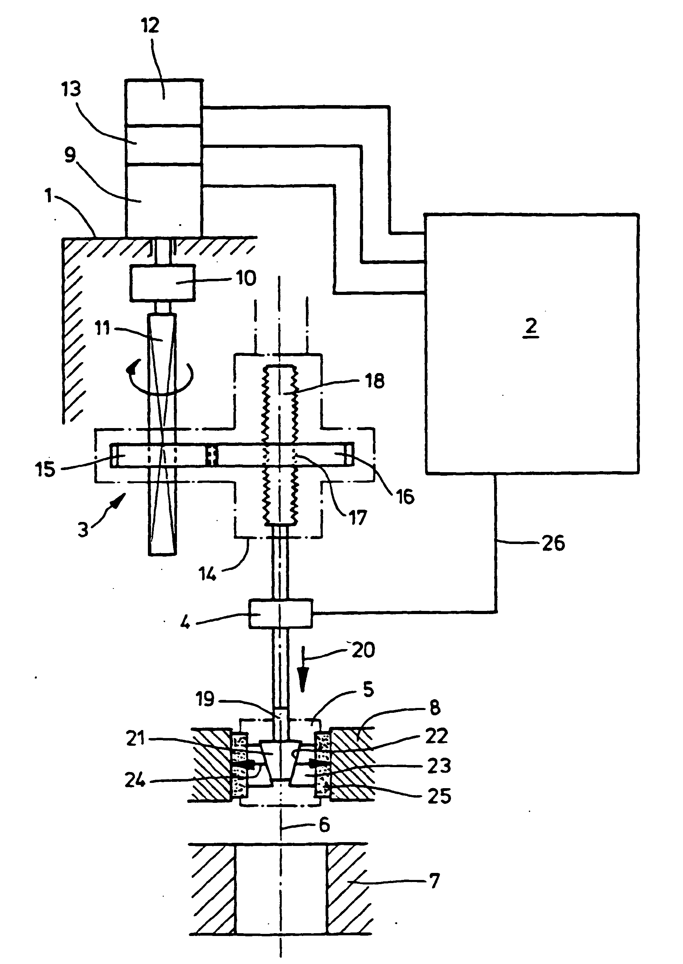

Die Zeichnung zeigt eine Honmaschine 1, die eine numerische Steuerung 2 enthält. Diese Steuerung ist an eine Zustelleinrichtung 3 angeschlossen, die über eine Kraftmeßdose 4 mit einem Honwerkzeug 5 verbunden ist. In der zeichnerischen Darstellung befindet sich das Honwerkzeug 5 in einem koaxial zu seiner Werkzeugachse 6 und oberhalb eines Werkstückes 7 angeordneten Eichring 8. Der Eichring entspricht einem Muster-Werkstück. An seiner Stelle kann auch ein auf genaues Fertigmaß bearbeitetes Werkstück als sogenanntes Meisterwerkstück vorgesehen sein.

Zu der Zustelleinrichtung 3 gehört ein ortsfest angeordneter Gleichstrommotor 9, der über eine Kupplung 10 eine Polygonwelle 11 antreibt. Die Drehlage der Motorwelle wird über einen Drehimpulsgeber 12 gesteuert. Die Drehzahl der Welle wird mittels eines Drehzahlmessers 13 geregelt. Die Polygonwelle 11 dient als Antriebswelle für ein Zustellgetriebe 14, das ein auf der Welle 11 drehfest und axial verschiebbar angeordnetes Antriebszahnrad 15 und ein von ihm angetriebenes Zahnrad 16 enthält, das koaxial zur Werkzeugachse 6 angeordnet ist. In dem Zahnrad 16 ist eine zur Werkzeugachse 6 koaxiale Gewindebohrung 17 vorgesehen, in die eine Gewindespindel 18 eingreift.

Die Gewindespindel 18 ist gegen Verdrehen gesichert und führt bei Drehung des Zahnrades 16 eine der Gewindesteigung entsprechende axiale Bewegung aus, die über die Kraftmeßdose 4 direkt auf eine Zustellstange 19 übertragen wird, die in das Honwerkzeug 5 eingreift.

Bei einer axialen Abwärtsbewegung der Zustellstange 19 in Richtung des Pfeiles 20 verschiebt ein mit der Zustellstange einstückig ausgebildeter Kegelstumpfkörper 21 entlang von Keilflächen 22 Honsteinträger 23, an denen Honsteine 25 befestigt sind. Die Honsteine werden daher in Richtung der Pfeile 24 radial gegen die Innenwand des Eichringes 18 zugestellt und an sie angedrückt.

Die Honmaschine wird mittels der numerischen Steuerung 2 gestartet. Dabei fährt das Honwerkzeug 5 in den Eichring 8 ein. Diese Hubbewegung wird nach Erreichen der in der Zeichnung dargestellten Lage beendet. Nunmehr wird die Zustelleinrichtung 3 gestartet. Dabei werden die Honsteine zunächst im Eilgang in Richtung der Pfeile 24 zugestellt, bis sie an der Innenwand des Eichringes 8 anliegen und ein vorgebbares Anlegemoment erreicht ist. Dann wird die Eilzustellung gestoppt und sofort anschließend werden die Honsteine um einen bestimmten geringen Betrag zurückgestellt, um das gesamte Zustellsystem mechanisch zu entspannen. Nunmehr wird eine Feinzustellung eingeleitet, die der späteren Zustellung der Honsteine im Werkstück für die Zerspanarbeit entspricht. Die Honsteine werden dadurch gegen die Innenwandung des Eichringes 8 gedrückt. Bei der weiteren Zustellung wirkt sich der Zustellweg der Zustellstange 19 als Zustellkraft aus, die von den Honsteinen 25 auf die Bohrungswandung wirkt und fortlaufend von der Kraftmeßdose 4 gemessen wird. Die Meßwerte werden als Signale über eine Leitung 26 der numerischen Steuerung 2 zugeführt. In dieser Steuerung ist ein durch Eingabe vorgewählter Wert der Zustellkraft gespeichert. Sobald die gemessens Zustellkraft diesen Wert erreicht, wird die Zustellung beendet. Der dann erreichte Punkt des Zustellweges der Zustellstange 19 wird in der Steuerung 2 als "Fertigmaß" gespeichert.

Anschließend werden die Honsteine mittels der Zustelleinrichtung 3 um einen in der Steuerung 2 programmierbaren Betrag zurückgestellt, so daß das Honwerkzeug 5 nunmehr in die Bohrung des Werkstückes 7 eingefahren werden kann. Danach beginnt die Honoperation in üblicher Weise. Sie wird automatisch über die numerische Steuerung 2 in dem Moment beendet, in dem der gespeicherte "Fertigmaß"-Punkt erreicht wird. Hierbei wird die Zustellkraft am Werkstück 7 während des Honprozesses ständig mittels der Kraftmeßdose 4 gemessen und als Signal über die Leitung 26 der Steuerung 2 zugeführt.

Nach Beendigung des Honprozesses werden die Honsteine 25 mittels der Zustelleinrichtung 3 zurückgestellt, und das Honwerkzeug 5 wird aus der Bohrung des Werkstückes 7 ausgefahren, bis sich die Honsteine wieder vollständig innerhalb des Eichringes 8 befinden. Nunmehr kann der Zustellweg nachjustiert werden. Hierfür wurde bei dem vorangegangenen Honprozeß in der Steuerung 2 der Wert der Zustellkraft, die unmittelbar vor Erreichen des Fertigmaßes vorhanden war, mit dem eingespeicherten Wert verglichen. Ergeben sich dabei Abweichungen, so wird der gemessene Wert eingespeichert und der frühere Wert gelöscht oder überschrieben. Dieser Speicherwert der Zustellkraft wird nunmehr für die Überprüfung und ggf. Nachstellung des Zustellweges der Zustellstange ausgewertet. Die Honsteine werden gegen die Wandung des Eichringes zugestellt. Hat sich bei dem vorangegangenen Vergleich eine Abweichung und damit ein anderer Speicherwert der Zustellkraft ergeben, so ist zum Erreichen dieser geänderten Zustellkraft in dem Eichring eine andere - größere oder kleinere - Wegstrecke der Zustellstange (19) erforderlich, und es ergibt sich folglich ein neuer "Fertigmaß"-Punkt für den Zustellweg, bei dessen Erreichen die Zustellung automatisch beendet wird. Dieser Wert wird gespeichert, wobei der ältere Wert gelöscht oder überschrieben wird. Bei der anschließenden Zerspanarbeit in dem nächstfolgenden Werkstück ist infolge des geänderten Zustellweges nunmehr die bei der Bearbeitung des vorangegangenen Werkstückes kurz vor Erreichen des Fertigmaßes aufgetretene Zustellkraft maßgebend, so daß also die unterschiedlichen Gegebenheiten bei der Zerspanung berücksichtigt werden.

Die Maßjustierung geschieht in Abhängigkeit von der jeweils kurz vor Erreichen des "Fertigmaß"-Punktes bei jedem Werkstück gemessenenen Zustellkraft. Der neu eingestellte "Fertigmaß"-Punkt des Zustellweges bleibt so lange erhalten, bis der gemessene von dem eingespeicherten Wert der Zustellkraft abweicht. Es wird zu diesem Zweck ständig bei jedem in Bearbeitung befindlichen Werkstück die kurz vor Erreichen des "Fertigmaß"-Punktes, also kurz vor dem Abschalten gemessene Zustellkraft mit dem zuletzt gespeicherten Wert der Zustellkraft verglichen, und bei Überschreiten einer zweckmäßig vorgegebenen Mindestabweichung wird der neuere Wert gespeichert und der ältere Wert gelöscht bzw. überschrieben. Nach jeder Speicherung eines neuen Wertes der Zustellkraft wird eine neue Maßjustierung durchgeführt.

Der zustellweg wird also bei Bearbeitung mehrerer Werkstücke in einem Arbeitszyklus nach Maßgabe eines Istwertes der Zustellkraft bestimmt, der dadurch ermittelt wird, daß an einem vorher bearbeiteten Werkstück die Zustellkraft unmittelbar vor dem Abschalten der Zustellung gemessen, als Vergleichswert in die numerische Steuerung 2 eingegeben und bei Abweichung von dem vorher eingespeicherten Wert der zuletzt gemessene Wert der Zustellkraft gespeichert wird; mit diesem Wert der Zustellkraft wird dann im Eichring der "Fertigmaß"-Punkt des Zustellweges neu eingestellt.

Durch eine regelmäßige Maßjustierung im Eichring wird auch eine Abnutzung der Honsteine berücksichtigt. Dabei wird in vorgebbaren Intervallen im Eichring kontrolliert, ob mit der eingespeicherten Zustellkraft eine Änderung des eingespeicherten "Fertigmaß"-Punktes auftritt. Bei Abnutzung der Honsteine vergrößert sich der Zustellweg und ein neuer "Fertigmaß"-Punkt wird eingespeichert.

Wenn Werkstücke mit unterschiedlichen Nenndurchmessern der Bohrung, also unterschiedlich festgelegten Fertigmaßen ihrer Bohrung, nacheinander auf der Maschine mit nur einem Werkzeug bearbeitet werden sollen, so kann in dem Rechner der Steuerung der "Fertigmaß"-Punkt des Zustellweges entsprechend dem momentan zu bearbeitenden Nenndurchmesser umgerechnet werden. Dies geschieht zweckmäßig nach einer Maßkontrolle im Eichring. Es können aber auch mehrere den jeweiligen Nenndurchmessern zugeordnete Eichringe oder Meisterwerkstücke vorgesehen sein, die in einem Reihen- oder Revolvermagazin magaziniert sein können und dann entsprechend den zu bearbeitenden Werkstücken für die Maßkontrolle in den Bewegungsweg des Werkzeuges gebracht werden. Mit einer solchen Einrichtung kann eine höhere Maßgenauigkeit als durch Umrechnung des Zustellweges erreicht werden.

Das erfindungsgemäße Verfahren ist insbesondere auch für die maßgenaue Bearbeitung von Werkstücken geeignet, die sich infolge ihrer konstruktiven Gestaltung unter den Bearbeitungskräften elastisch aufweiten. Diese elastischen Aufweitungen werden bei Verwendung eines Meisterwerkstückes durch die erfindungsgemäße Vorgabe des Zustellweges entsprechend einer gemessenen Zustellkraft berücksichtigt, da sie von einer vorgegebenen Bearbeitungskraft in dem sich gleich verhaltenden Meisterwerkstück abhängig sind.

Die numerische Steuerung kann auch ein Korrekturprogramm enthalten, das die bei der Maßkontrolle im Eichring festgestellten Abweichungen von den vorgegebenen Werten auswertet. Damit kann das Verhalten der Werkstücke unter den Bearbeitungskräften noch genauer berücksichtigt und dementsprechend die Maßgenauigkeit weiter erhöht werden.

Bei sehr hohen Anforderungen an die Maßgenauigkeit ist es auch möglich, die erfindungsgemäße Maschine mit einer an sich bekannten Nachmeßeinrichtung zur Maßkontrolle der fertig bearbeiteten Werkstücke auszustatten. Eine solche Nachmeßeinrichtung besteht beispielsweise aus einem pneumatischlelektrischen Meßgerät mit einem angeschlossenen Meßdorn, der zum Messen automatisch in die fertig bearbeitete Werkstückbohrung eingefahren wird. Der gemessene Wert wird in einem Meßgerät mit dem vorgegebenen Fertigmaß verglichen, und eine Abweichung wird als Signal an die numerische Steuerung abgegeben und dort zur Korrektur des gespeicherten Fertigmaßes ausgewertet. Dadurch können auftretende Maßabweichungen sofort erkannt und von der numerischen Steuerung kompensiert werden, so daß die Toleranzen der fertig bearbeiteten Bohrungen in sehr engen Grenzen gehalten werden können.

## Patentansprüche

1. Verfahren zum Feinbearbeiten von Bohrungen in Werkstücken unter Verwendung eines Werkzeuges (5) mit expandierbaren Arbeitsteilen wie Honleisten oder Honsteinen (25), bei dem die Arbeitsteile vor Beginn der Bearbeitung innerhalb eines Muster-Werkstückes, beispielsweise eines Eichringes (8), mittels einer Zustelleinrichtung (3), die ein Zustellglied (19) enthält, bis an die Innenwandung des Muster-Werkstückes zugestellt werden, wobei der Zustellweg des Zustellgliedes (19) für die nachfolgende Bearbeitung der Bohrung reproduzierbar voreingestellt wird,
**dadurch gekennzeichnet, daß** eine Zustellkraft vorgegeben wird, durch die die Arbeitslage der Arbeitsteile für das Erreichen des Fertigmaßes bestimmt wird, und daß die Arbeitsteile an die Innenwandung des Muster-Werkstückes zugestellt werden, während die Zustellkraft gemessen und ein Endwert für den Zustellweg fixiert wird, wenn die vorgegebene Zustellkraft erreicht ist,
und bei der nachfolgenden Feinbearbeitung der Bohrung eines Werkstückes (7) die Zustellkraft am Werkstück (7) während des Honprozesses ständig gemessen und als Signal einer Steuerung zugeführt und der Zustellweg nach Maßgabe dieses Endwertes bestimmt wird.

2. Verfahren nach Anspruch 1,
**dadurch gekennzeichnet, daß** die Zustellung während der Bearbeitung gesteuert und in Abhängigkeit von dem voreingestellten Zustellweg des Zustellgliedes (19) automatisch beendet wird.

3. Verfahren nach Anspruch 1 oder 2.
**dadurch gekennzeichnet, daß** die Arbeitsteile des Werkzeuges nach Beendigung der Zustellung im Muster-Werkstück um ein vorgegebenes Maß zurückgestellt werden.

4. Verfahren nach Anspruch 3,
**dadurch gekennzeichnet, daß** der Endwert des Zustellweges bei Bearbeitung mehrerer Werkstücke in einem Arbeitszyklus nach Maßgabe einer Zustellkraft bestimmt wird, die durch Messung an einem vorher bearbeiteten Werkstück bei oder unmittelbar vor Erreichen des Fertigmaßes der Bohrung ermittelt wurde.

5. Verfahren nach Anspruch 3 oder 4,
**dadurch gekennzeichnet, daß** der Endwert für den Zustellweg und der Wert der vorzugebenden Zustellkraft gespeichert und zur Steuerung eines Antriebs für die Zustellbewegung ausgewertet werden.

6. Verfahren nach Anspruch 4 oder 5,
**dadurch gekennzeichnet, daß** der gespeicherte Wert der Zustellkraft in einem Rechner mit dem aktuellen gemessenen Istwert verglichen und bei Abweichung um einen vorgegebenen Betrag gelöscht wird, wonach ein neuer Wert der Zustellkraft nach Maßgabe des zuletzt gemessenen Istwertes zur Änderung des Endwertes des Zustellweges des Zustellgliedes (19) ausgewertet wird.

7. Verfahren nach Anspruch 6,
**dadurch gekennzeichnet, daß** für die Änderung des Zustellweges ein Mindestbetrag der Änderung der Zustellkraft programmiert wird.

8. Verfahren nach einem der Ansprüche 1 bis 7,
**dadurch gekennzeichnet, daß** der durch die vorgegebene Zustellkraft bestimmte Zustellweg durch Umrechnung der Wegstrecke zur Bearbeitung von Bohrungen unterschiedlichen Durchmesser-Fertigmaßes anzupassen ist.

9. Verfahren nach einem der Ansprüche 1 bis 8,
**dadurch gekennzeichnet, daß** das Werkzeug (5) zur Maßkontrolle periodisch in das Muster-Werkstück (8) eingefahren wird, und daß bei der Maßkontrolle unter Vorgabe der Zustellkraft der Zustellweg des Zustellgliedes (19) um ein Maß vergrößert wird, das der Abnutzung der Arbeitsteile (25) des Werkzeuges (5) entspricht.

10. Maschine eingerichtet zur Durchführung des Verfahrens nach einem der Ansprüche 1 bis 9, insbesondere Honmaschine, mit einem Werkzeug (5), das expandierbare Arbeitsteile wie Honleisten oder Honsteine (25) aufweist, die vor Beginn der Bearbeitung innerhalb eines Muster-Werkstückes, beispielsweise eines Eichringes (8), mittels einer Zustelleinrichtung (3), die ein Zustellglied (19) enthält, bis an die Innenwandung des Muster-Werkstückes zustellbar sind, wobei der Zustellweg des Zustellgliedes (19) für die nachfolgende Bearbeitung der Bohrung reproduzierbar voreinstellbar ist, **dadurch gekennzeichnet, dass** die Maschine (1) eine numerische Steuerung (2) enthält, an die die Zustelleinrichtung (3) für das Werkzeug (5) und ein der Zustelleinrichtung (3) zugeordnetes Kraftmessglied (4) angeschlossen sind, wobei durch das Kraftmessglied (4) die Zustellkraft ständig gemessen und in Abhängigkeit davon in der numerischen Steuerung (2) die Arbeitslage der Arbeitsteile für das Erreichen des Fertigmaßes bestimmt wird und das Kraftmessglied (4) zwischen Zustelleinrichtung (3) und dem Werkzeug (5) an dem als Zustellstange ausgeführten Zustellglied (19), durch die die Arbeitsteile an die Innenwandung des Muster-Werkstücks zugestellt werden, angeordnet ist.

11. Maschine nach Anspruch 10,
**dadurch gekennzeichnet, daß** an die numerische Steuerung (2) ein Antriebsmotor (9) mit Drehimpulsgeber (12) für ein Getriebe (11. 15, 16, 18) der Zustelleinrichtung (3) angeschlossen ist.

12. Maschine nach einem der Ansprüche 10 oder 11,
**dadurch gekennzeichnet, daß** das Muster-Werkstück, das vorzugsweise als Eichring (8) ausgeführt ist, durch Zuordnung zu einer Werkstückaufnahme koaxial zu der zu bearbeitenden Bohrung des Werkstückes (7) angeordnet ist.

13. Maschine nach einem der Ansprüche 9 bis 12,
**dadurch gekennzeichnet, daß** pro Werkzeug (5) zwei oder mehr Muster-Werkstücke für unterschiedliche Bohrungsdurchmesser vorgesehen sind.

14. Maschine nach Anspruch 13,
**dadurch gekennzeichnet, daß** die Muster-Werkstücke magaziniert und wahlweise in den Bewegungsweg des Werkzeuges (5) verstellbar sind.

15. Maschine nach einem der Ansprüche 10 bis 14,
**dadurch gekennzeichnet, daß** die numerische Steuerung (2) eine elektronische Korrekturschaltung, insbesondere ein Korrekturprogramm zur Änderung des Zustellweges in Abhängigkeit von Meßwerten enthält, die an dem jeweils bearbeiteten Werkstück (7) zu ermitteln sind.

16. Maschine nach Anspruch 15,
**dadurch gekennzeichnet, daß** an die numerische Steuerung (2) eine Werkstück-Nachmeßeinrichtung angeschlossen ist, die Abweichungen der von ihr gemessenen Bohrungsmaße von den vorgegebenen Maßen als Steuersignale an die numerische Steuerung (2) abgibt, in der die Maßabweichungen als Korrekturwerte für den Zustellweg auswertbar sind.

## Claims

1. A method of precision-finishing bores in workpieces using a tool (5) with expandable working elements such as honing sticks or honing stones (25), in which, prior to commencement of finishing, the working elements are fed by an infeed device (3) containing an infeed member (19) inside a specimen workpiece, for example a calibration ring (8), the feed path of the infeed member (19) being reproducibly pre-set for subsequent bore finishing,
**characterised in that** a feed force is predetermined by means of which the working position of the working elements needed to produce the finished dimensions is determined, and **in that** the working elements are fed onto the internal wall of the specimen workpiece whilst the feed force is measured and an end value for the feed path is fixed when the predetermined feed force is reached, and for the subsequent precision-finishing of the bore of a workpiece (7) the feed force at the workpiece (7) is permanently measured and supplied as a signal to a control (2) and the feed path is determined by reference to this end value.

2. A method as claimed in claim 1,
**characterised in that** infeed is controlled during finishing and is automatically terminated depending on the predetermined feed path of the infeed member (19).

3. A method as claimed in claim 1 or 2,
**characterised in that** the working elements of the tool are retracted by a predetermined amount when feeding in the specimen workpiece is terminated.

4. A method as claimed in claim 3,
**characterised in that** when finishing several workpieces in one work cycle, the end value of the feed path is determined by reference to a feed force which was detected by measuring a previously finished workpiece on or immediately prior to the bore's reaching its finished dimensions.

5. A method as claimed in claim 3 or 4,
**characterised in that** the end value for the feed path and the value of the feed force to be predetermined are stored and evaluated in order to control a drive for the infeed motion.

6. A method as claimed in claim 4 or 5,
**characterised in that** the stored value of the feed force is compared in a computer with the current measured actual value and is deleted if there is a variance of a predetermined amount, whereupon a new value of the feed force is evaluated by reference to the last measured actual value in order to amend the end value of the feed path of the infeed member (19).

7. A method as claimed in claim 6,
**characterised in that** in order to amend the feed path, a minimum amount is programmed for the change in the feed force.

8. A method as claimed in one of claims 1 to 7,
**characterised in that** in order to finish bores of a differing diameter-finished size, the feed path determined by means of the predetermined feed force is adjusted by converting the travel distance.

9. A method as claimed in one of claims 1 to 8,
**characterised in that** the tool (5) is periodically inserted in the specimen workpiece (8) in order to check dimensions and **in that** the feed path of the infeed member (19) is increased, whilst pre-setting the feed force, during the size control process by a degree corresponding to the wear on the working elements (25) of the tool (5) .

10. A machine programmed to implement the method as claimed in one of claims 1 to 9, in particular a honing machine, with a tool (5) having expandable working elements such as honing sticks or honing stones (25), which, prior to commencement of finishing, can be fed, by means of an infeed device (3) containing an infeed member (19), inside a specimen workpiece, for example a calibration ring (8), as far as the internal wall of the specimen workpiece, wherein the feed path of the infeed member (19) can be reproducibly pre-set for the subsequent finishing process of a bore, **characterised in that** the machine (1) contains a numerical control (2) to which the infeed device (3) for the tool (5) and a load measuring member (4) are connected, the feed force being permanently measured by the load measuring member (4) and, depending thereon, the working position of the working elements needed to reach the finished dimensions being determined in the numerical control (2), and the load measuring member (4) is arranged between the infeed device (3) and the tool (5) on the infeed member (19) provided in the form of an infeed bar, by means of which the working elements are fed onto the internal wall of the specimen workpiece.

11. A machine as claimed in claim 10,
**characterised in that** a drive motor (9) with a rotary pulse transmitter (12) for a gear (11, 15, 16, 18) of the infeed device (3) is connected to the numerical control (2).

12. A machine as claimed in one of claims 10 or 11,
**characterised in that** the specimen workpiece, which is preferably provided as a calibration ring (8), is assigned to a workpiece holder so that it is arranged coaxially with the bore of the workpiece (7) to be finished.

13. A machine as claimed in one of claims 9 to 12,
**characterised in that** two or more specimen workpieces for different bore diameters are provided for each tool (5).

14. A machine as claimed in claim 13,
**characterised in that** the specimen workpieces are stored in a rack and can be optionally adjusted in the path of displacement of the tool (5).

15. A machine as claimed in one of claims 10 to 14,
**characterised in that** the numerical control (2) contains an electronic correction circuit, in particular a correction programme for changing the infeed path depending on measured values, which are to be applied to the workpiece (7) currently being processed.

16. A machine as claimed in claim 15,
**characterised in that** a device is connected to the numerical control (2) for taking finished measurements of the workpiece, which applies variances between the bore dimensions measured by it and the predetermined dimensions as control signals to the numerical control (2), where the measured variances can be evaluated as corrective values for the infeed path.

## Revendications

1. Procédé d'usinage de précision d'alésages dans des pièces au moyen d'un outil (5) à parties ouvrières expansibles telles que bâtons rodoirs ou pierres à roder (25), dans lequel les parties ouvrières sont, avant le début de l'usinage dans une pièce modèle, par exemple une bague étalon (8), avancées jusqu'à la paroi intérieure de celle-ci au moyen d'un dispositif d'avance (3) qui contient un élément d'avance (19), la course d'avance de l'élément d'avance (19) étant préréglée de manière reproductible pour l'usinage qui suit de l'alésage, **caractérisé par le fait qu'**il est fixé une force d'avance par laquelle est déterminée la position de travail des parties ouvrières pour que la dimension finale soit atteinte, et que les parties ouvrières sont avancées jusqu'à la paroi intérieure de la pièce modèle, tandis que la force d'avance est mesurée et qu'une valeur finale de la course d'avance est fixée lorsque la force d'avance fixée est atteinte,
et lors de l'usinage de précision qui suit, de l'alésage d'une pièce (7), la force d'avance sur la pièce (7) pendant le procédé de rodage est en permanence mesurée et transmise sous forme de signal d'une commande, et la course d'avance est déterminée d'après cette valeur finale.

2. Procédé selon la revendication 1, **caractérisé par le fait que** l'avance est commandée pendant l'usinage et il y est mis fin automatiquement en fonction de la course d'avance préréglée de l'élément d'avance (19).

3. Procédé selon l'une des revendications 1 et 2,
**caractérisé par le fait que** les parties ouvrières de l'outil sont, à l'issue de l'avance dans la pièce modèle, reculées d'une distance fixée.

4. Procédé selon la revendication 3, **caractérisé par le fait que** la valeur finale de la course d'avance, en cas d'usinage de plusieurs pièces dans un cycle de travail, est déterminée d'après une force d'avance qui a été déterminée par mesure sur une pièce usinée auparavant à l'instant où est atteinte ou immédiatement avant que soit atteinte la dimension finale de l'alésage.

5. Procédé selon l'une des revendications 3 et 4,
**caractérisé par le fait que** la valeur finale de la course d'avance et la valeur de la force d'avance à fixer sont mises en mémoire et exploitées pour la commande d'un dispositif moteur pour le mouvement d'avance.

6. Procédé selon l'une des revendications 4 et 5,
**caractérisé par le fait que** la valeur mise en mémoire de la force d'avance est comparée dans un calculateur avec la valeur mesurée actuelle et, en cas d'écart d'une quantité fixée, est effacée, après quoi une nouvelle valeur de la force d'avance est évaluée d'après la valeur mesurée en dernier pour la modification de la valeur finale de la course d'avance de l'élément d'avance (19).

7. Procédé selon la revendication 6, **caractérisé par le fait que** pour la modification de la course d'avance est programmée une valeur minimale de la modification de la force d'avance.

8. Procédé selon l'une des revendications 1 à 7,
**caractérisé par le fait que** la course d'avance déterminée par la force d'avance fixée peut être adaptée par nouveau calcul de la course pour l'usinage d'alésages à dimension finale de diamètre différente.

9. Procédé selon l'une des revendications 1 à 8,
**caractérisé par le fait que** pour le contrôle dimensionnel, l'outil (5) est introduit périodiquement dans la pièce modèle (8), et que lors du contrôle dimensionnel avec fixation de la force d'avance, la course d'avance de l'élément d'avance (19) est augmentée d'une quantité correspondant à l'usure des parties ouvrières (25) de l'outil (5).

10. Machine agencée pour la mise en oeuvre du procédé selon l'une des revendications 1 à 9, en particulier machine à roder, comportant un outil (5) qui présente des parties ouvrières expansibles telles que bâtons rodoirs ou pierres à roder (25) qui, avant le début de l'usinage dans une pièce modèle, par exemple une bague étalon (8), peuvent être avancées jusqu'à la paroi intérieure de celle-ci au moyen d'un dispositif d'avance (3) qui contient un élément d'avance (19), la course d'avance de l'élément d'avance (19) étant préréglable de manière reproductible pour l'usinage qui suit de l'alésage,
**caractérisée par le fait que** la machine (1) contient une commande numérique (2) à laquelle sont reliés le dispositif d'avance (3) pour l'outil (5) et un organe dynamométrique (4) associé au dispositif d'avance (3), l'organe dynamométrique (4) mesurant en permanence la force d'avance, et en fonction de celle-ci étant déterminée dans la commande numérique (2) la position de travail des parties ouvrières pour que la dimension finale soit atteinte, et l'organe dynamométrique (4) étant placé entre le dispositif d'avance (3) et l'outil (5) sur l'élément d'avance (19), réalisé sous la forme d'une tige d'avance, qui avance les parties ouvrières jusqu'à la paroi intérieure de la pièce modèle.

11. Machine selon la revendication 10, **caractérisée par le fait qu'**à la commande numérique (2) est relié un moteur d'entraînement (9) avec générateur d'impulsions de rotation (12) pour un engrenage (11, 15, 16, 18) du dispositif d'avance (3).

12. Machine selon l'une des revendications 10 et 11,
**caractérisée par le fait que** la pièce modèle, qui est réalisée de préférence sous la forme d'une bague étalon (8), est, par association à un porte-outil, placée coaxialement avec l'alésage à usiner de la pièce (7).

13. Machine selon l'une des revendications 9 à 12,
**caractérisée par le fait que** pour chaque outil (5) sont prévues plusieurs pièces modèles pour des diamètres d'alésage différents.

14. Machine selon la revendication 13, **caractérisée par le fait que** les pièces modèles sont mises en magasin et peuvent être mises au choix sur la trajectoire de l'outil (5).

15. Machine selon l'une des revendications 10 à 14,
**caractérisée par le fait que** la commande numérique (2) contient un circuit électronique de correction, en particulier un programme de correction pour la modification de la course d'avance en fonction de valeurs mesurées déterminées sur la pièce (7) usinée.

16. Machine selon la revendication 15, **caractérisée par le fait qu'**à la commande numérique (2) est relié un dispositif de vérification de la dimension des pièces qui transmet à celle-ci sous forme de signaux de commande les écarts entre les dimensions d'alésage qu'il a mesurées et les dimensions prescrites, lesquels écarts peuvent être exploités dans la commande numérique comme valeurs de correction de la course d'avance.
